# EUROPÄISCHE PATENTSCHRIFT

(11) **EP 0 771 728 B1**
(45) Veröffentlichungstag und Bekanntmachung des Hinweises auf die Patenterteilung: **11.09.2002**
(21) Anmeldenummer: 96115917.5
(22) Anmeldetag: 04.10.1996
(51) Int. Cl.: B64D 11/00

(54) **Gepäckablage für eine Passagierkabine, insbesondere für ein Verkehrsflugzeug**
Luggage bins for the passenger cabin of an airliner
Coffre à bagages pour la cabine des passagers d'un avion de transport

(30) Priorität: 03.11.1995 DE 19540929
(43) Veröffentlichungstag der Anmeldung: 07.05.1997
(73) Patentinhaber: Airbus Deutschland GmbH, 21129 Hamburg (DE)
(72) Erfinder: Schumacher, Markus, 21614 Buxtehude (DE); Muin, Andrew, 21614 Buxtehude (DE)
(74) Vertreter: Hansmann, Dierk, Dipl.-Ing.

(56) Entgegenhaltungen:
- WO-A-95/18040
- DE-A- 4 130 644

## Beschreibung

Die Erfindung betrifft eine Gepäckablage in einer Passagierkabine, insbesondere in einem Verkehrsflugzeug, mit Gepäckfächern, welche über Führungssysteme aus einer geschlossenen Transportposition in eine offene Beladeposition absenkbar sind.

In Flugzeugen ist es bisher üblich, in der Passagierkabine nur Handgepäck mitzunehmen, da der Stauraum in Form von Gepäckablagen innerhalb der Kabine nur eine begrenzte Kapazität bietet. Gepäckablagen in einer Flugzeugpassagierkabine, in zunehmendem Maße auch mit einer absenkbaren Schale ausgestattet, sind beispielsweise aus DE 41 30 644 C2 bekannt.
Für größere Gepäckstücke ist der Frachtraum im Flugzeug vorgesehen, wobei es tendenziell zu einer weiteren Zunahme des Handgepäckes kommt und die Bereitschaft der Passagiere zur Abgabe des Gepäckes nachläßt. Gründe dafür sind einerseits in einer besseren Verfügbarkeit der Gepäckstücke während des Fluges zu sehen und andererseits auch aus zeitlicher Hinsicht, da das Aufgeben und Abholen des Gepäcks die Gesamtreisezeit erhöht und so für den Fluggast unnötige Wartezeiten entstehen.
Auch die Fluggesellschaften können bei diesem Trend ihre logistischen Einrichtungen entlasten und somit Kosten für das Be- und Entladen der Flugzeuge einsparen.

Demgemäß liegt der Erfindung die Aufgabe zugrunde, eine gattungsgemäße Gepäckablage derart auszubilden, daß innerhalb der Passagierkabine ausreichend große, aber noch handhabbare Gepäckfächer für die Passagiere zur Verfügung stehen. Dabei besteht das Erfordernis, daß verschiedene Gepäckarten, wie Koffer, Aktentaschen einerseits und Textilien, zerbrechliche bzw. empfindliche Tascheninhalte andererseits differenziert abgelegt werden können. Ebenfalls muß gewährleistet werden, daß die Gepäckablage innerhalb der Passagierkabine den Bewegungsraum der Passagiere nicht unnötig einschränkt und ein großzügiger Raumeindruck erhalten bleibt.

Diese Aufgabe wird mit den in Patentanspruch 1 angegebenen Maßnahmen gelöst. Die erfindungsgemäße Gepäckablage ist dabei je Gepäckfach aus mindestens zwei Staufächern gebildet, wobei in geschlossener Transportposition der Gepäckablage die Staufächer im Deckenbereich der Passagierkabine in Kabinenquerrichtung nebeneinander angeordnet sind und die Staufächer durch ihre Bodenplatten wenigstens einen Teil einer Deckenkontur der Passagierkabine bilden und an jeder Seite der Staufächer das Führungssystem als ein Koppelsystem zur gekoppelten Absenkung der Staufächer derart ausgebildet ist, daß in abgesenkter Beladeposition die Staufächer oberhalb der Sitzreihen übereinander, mit einem zum Gang gerichteten Zugriffsbereich positionierbar sind.

Dabei ist insbesondere von Vorteil, daß auch größere Gepäckstücke mit als Handgepäck in die Passagierkabine genommen werden können. Verschiedene Gepäckarten, wie Koffer, Aktentaschen einerseits und Textilien, zerbrechliche bzw. empfindliche Tascheninhalte andererseits können differenziert abgelegt werden, um empfindlichen Gepäckstücke nicht zu quetschen oder zu beschädigen. Mit der Anordnung der Staufächer im Deckenbereich der Kabine bleibt ein großzügiger Raumeindruck erhalten und der Bewegungsraum der Passagiere wird nicht unnötig eingeschränkt.

Weiterbildungen und zweckmäßige Ausgestaltungen ergeben sich aus den Unteransprüchen 2 - 10.
Mit den Maßnahmen gemäß Anspruch 2 bzw. 3 ist erreicht, daß entsprechend der Größe der Gepäckstücke auch verschieden große Staufächer je Gepäckablage zur Verfügung gestellt werden können.
Die Ausgestaltung gemäß Anspruch 4 ermöglicht eine Kaschierung der Konturkrümmung im Deckenbereich der Passagierkabine, die durch die Kontur des Flugzeugrumpfes hervorgerufen wird. Es wird eine nahezu horizontal verlaufende und breite Deckenkontur erreicht.
Mit der Maßnahme gemäß Anspruch 5 ist eine nach oben gestufte Deckenkontur erreicht. Das Absenken der Staufächer kann parallel realisiert werden und somit ist eine relativ einfaches Erreichen der Beladeposition mit einem unterhalb des Kleinteilfaches positioniertes Großteilfach ermöglicht, was das Laden von schweren Gepäckstücken in das Großteilfach erleichtert.
Mit der Ausgestaltung gemäß Anspruch 6 ist es möglich, im mittleren Deckenbereich Leuchtmittel für die Kabinenbereich vorzusehen.
Die Maßnahme gemäß Anspruch 7 gewährleistet, daß das Staufach nicht überfüllt und das Gepäck beim Schließen der Gepäckfächer nicht gequetscht wird.
Die Ausgestaltungen gemäß der Ansprüche 8, 9 bzw. 10 zeigen Ausbildungen des Koppelsystems zur Absenkung der Staufächer, die einfach realisierbar und handhabbar sind.

Die Erfindung wird nachstehend beschrieben, wobei die Ausbildung der Gepäckablage anhand der in der Zeichnung dargestellten Ausführungsbeispiele näher erläutert ist. In den Figuren sind gleiche Bauteile mit gleichen Bezugszeichen versehen.
Die Zeichnung zeigt
- in Fig. 1: eine Passagierkabine mit geschlossenen Gepäckablagen im Deckenbereich,
- in Fig. 2: einen Teilquerschnitt der Passagierkabine mit Darstellung einer offenen und der geschlossenen Gepäckablage in einer ersten Ausführungsform,
- in Fig. 3: einen Querschnitt der Passagierkabine mit einer zweiten Ausführungsform der Gepäckablage,
- in Fig. 4: einen Querschnitt der Passagierkabine mit einer dritten Ausführungsform der Gepäckablage und
- in Fign. 5 und 6: eine Darstellung eines Koppelsystems zum Absenken der Staufächer im geschlossenen und im abgesenkten Zustand der Gepäckablage.

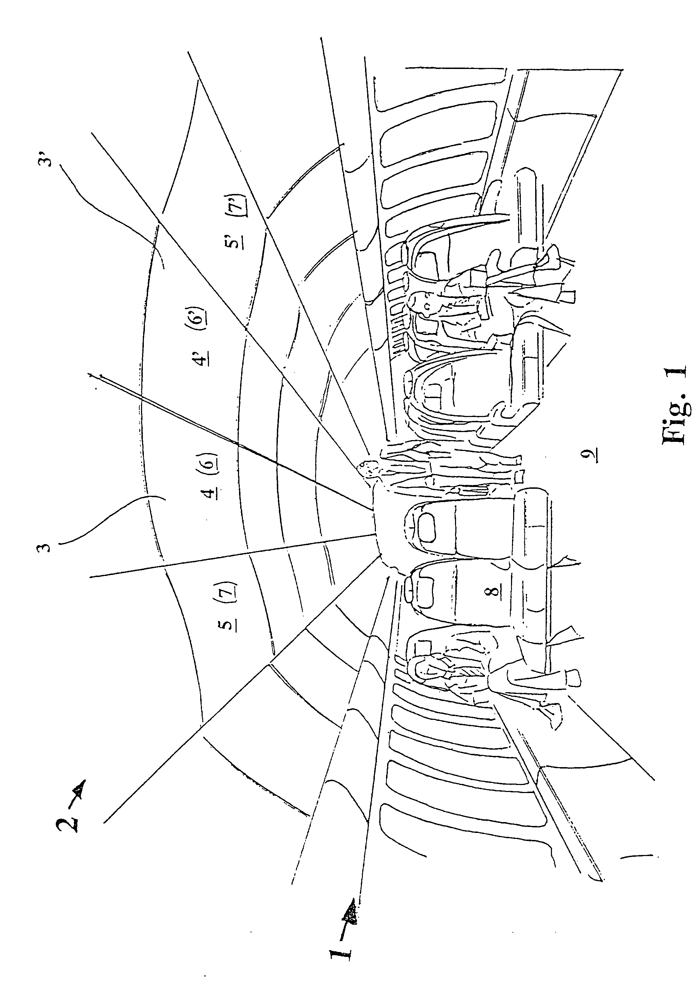

In Fig. 1 ist eine Passagierkabine 1 eines Flugzeuges in perspektivischer Darstellung ersichtlich. Im Deckenbereich 2 der Passagierkabine 1 ist für jede Kabinenseite eine Gepäckablage 3 bzw. 3' vorgesehen. Die Gepäckablage 3 bzw. 3' besteht aus Gepäckfächern mit je zwei, im Deckenbereich nebeneinander positionierten Staufächern 4, 5 bzw. 4', 5'. Die Bodenplatten 6, 7 bzw. 6', 7' der Staufächer 4, 5 bzw. 4', 5' stellen in geschlossener Transportposition der Gepäckablage 3 bzw. 3' zugleich die Kabinendecke dar. Die Bodenplatten 6, 7 bzw. 6', 7' der Staufächer 4, 5 bzw. 4', 5' sind in diesem Fall entsprechend der Kabinenverkleidung der gesamten Passagierkabine 1 gestaltet. Mit dieser Anordnung der Staufächer 4, 5 bzw. 4', 5' im Deckenbereich 2 der Passagierkabine 1 ist ein relativ großzügiger Raumeindruck der Passagierkabine 2 erhalten geblieben. Angestrebt wird eine möglichst horizontal verlaufende und breite Deckenkontur, die die dahinter liegenden Staufächer kaschiert. Die üblicherweise oberhalb der Sitzreihen 8, 8' vorgesehenen Gepäckablagen entfallen, im geschlossenen Zustand der Gepäckablagen 3, 3' sind die Staufächer 4, 5 bzw. 4', 5' in Richtung Kabinendecke 2 verlagert. Lediglich zum Beund Entladen der Gepäckablage 3, 3' sind die Staufächer 4, 5 bzw. 4', 5' in einen abgesenkten, offenen Beladezustand im Zugriffsbereich der Passagiere vom Gang 9 aus oberhalb der Sitzreihen 8, 8' positioniert.

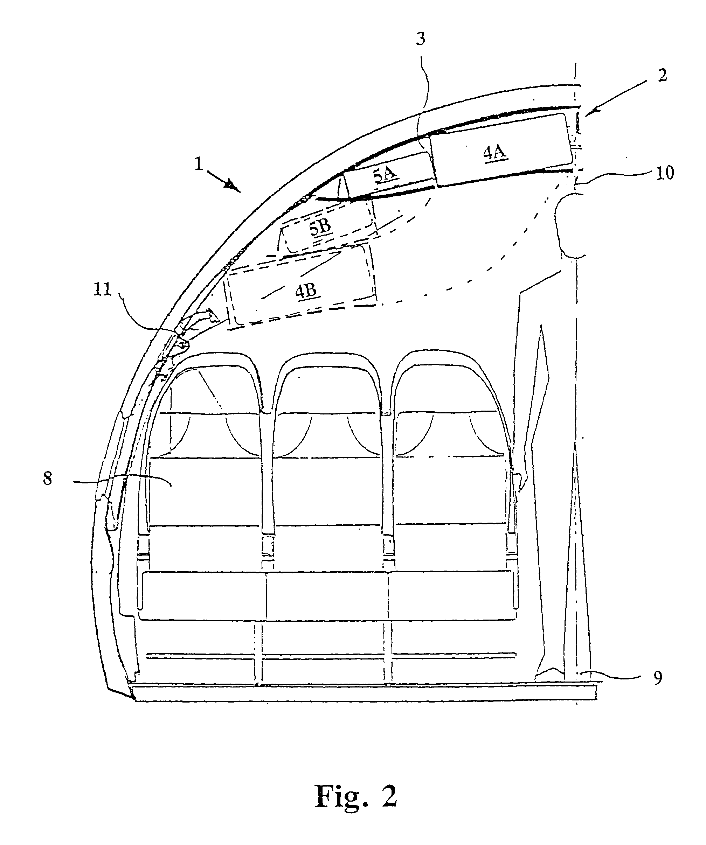

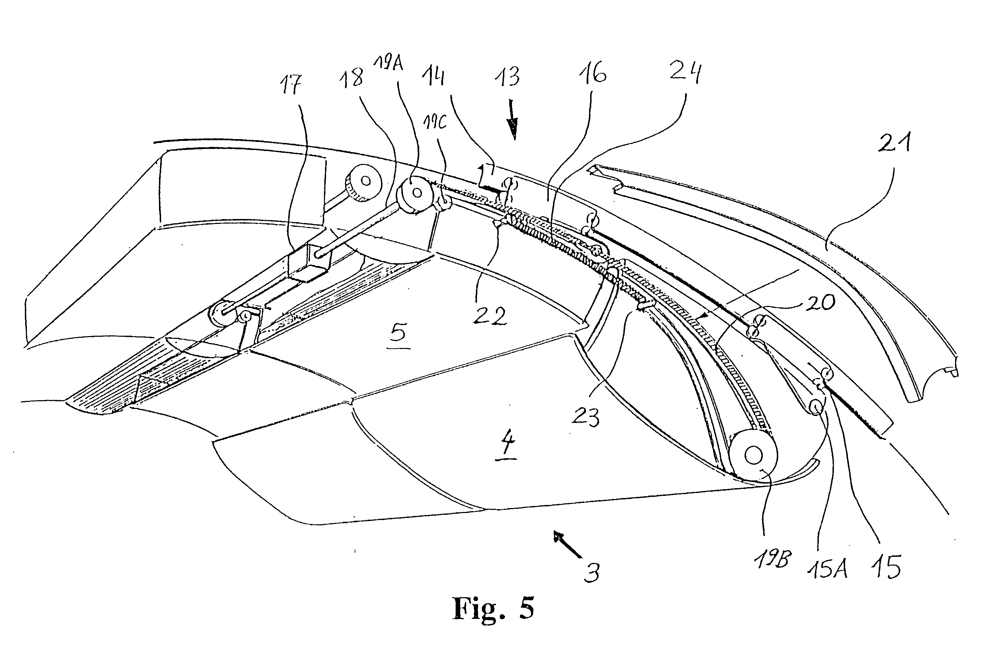

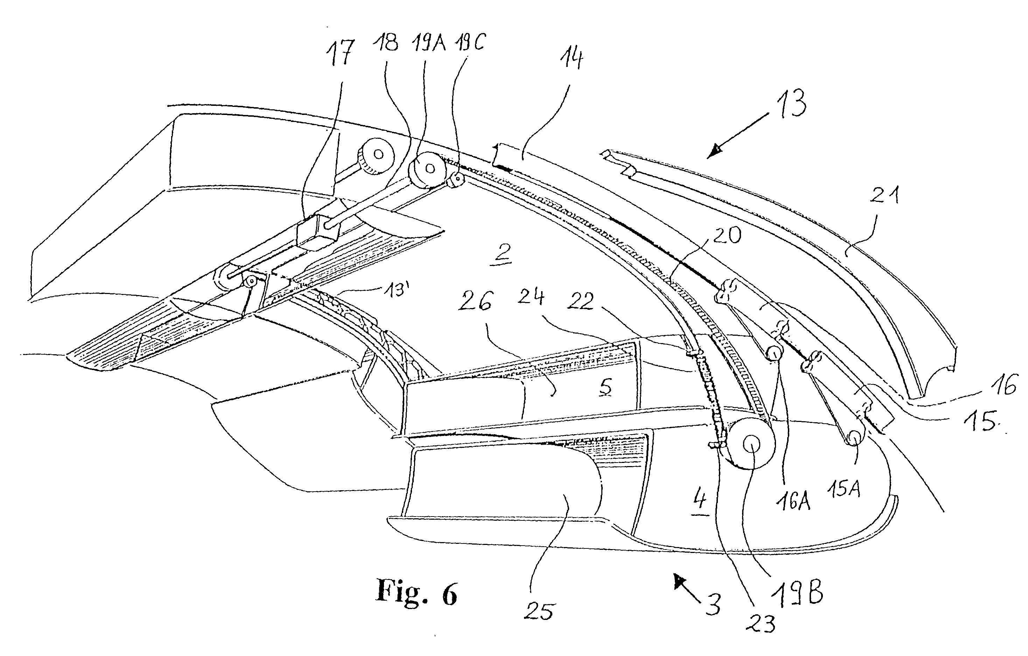

Die offene Beladeposition der Gepäckablage 3 ist zur Verdeutlichung in der Fig. 2 in einer Teilquerschnittsdarstellung der Passagierkabine 1 ersichtlich. Diese Figur zeigt die Lage der Staufächer 4, 5 einerseits im geschlossenen Zustand (4A, 5A) und andererseits im abgesenkten Zustand (4B, 5B), wobei die offene Position gestrichelt dargestellt ist. Es ist ersichtlich, daß das zur Rumpfmitte hin positionierte Staufach 4 bis an die Mittelachse 10 der Kabine 1 heranreicht. Um dies zu ermöglichen, werden die sonst im Deckenbereich 2 angeordneten Leuchtmittel 11 1 im Bereich der Seitenwand angeordnet, der sich vom Rand des Staufaches 5 bis zur Kopfhöhe der Sitzenden erstrecken kann. Wird eine Position unter Augenhöhe eines stehenden Menschen gewählt, so sind Lichtlenkgitter bzw. Lamellen vorzusehen. Die Staufächer 4, 5 sind unterschiedlich groß ausgebildet. So ist das Staufach 4 als Großteilfach ausgebildet und ist somit für größere Gepäckstücke vorgesehen. Das Staufach 5 ist als Kleinteilfach vorgesehen und dient eher zur Aufnahme von Kleingegenständen und Textilien. Das hilft, Kleidungsstücke und anderes empfindliches Gepäck vor Beschädigung oder Verschmutzung durch schwere, große Gegenstände zu schützen. Mit der Anordnung des Großteilfaches 4 zur Rumpfmitte hin und des Kleinteilfaches 5 außen daneben wird die Konturkrümmung des Flugzeugrumpfes kaschiert. Es wird eine nahezu horizontal verlaufende und breite Deckenkontur innerhalb der Passagierkabine im geschlossenen Zustand der Gepäckablagen erreicht.
Im abgesenkten Zustand sind die Staufächer 4B, 5B oberhalb der Sitzreihen 8 an der seitlichen Kabinendecke, übereinander positioniert und mit einem zum Gang gerichteten Zugriffsbereich angeordnet. Mittels eines Koppelsystems (gezeigt in Fig. 5 und 6), welches jeweils an den Wänden einer Seite der Staufächer 4, 5 vorgesehen ist, sind die beiden Staufächer in ihrem Bewegungsablauf zwangsgekoppelt. Im abgesenkten Zustand befindet sich die Ruhelage der Großteilbox 4B unterhalb jener der Kleinteilbox 5B. Damit ist das Heben der schwereren Gepäckstücke in die Großteilbox 4B auf eine Mindesthöhe reduziert.

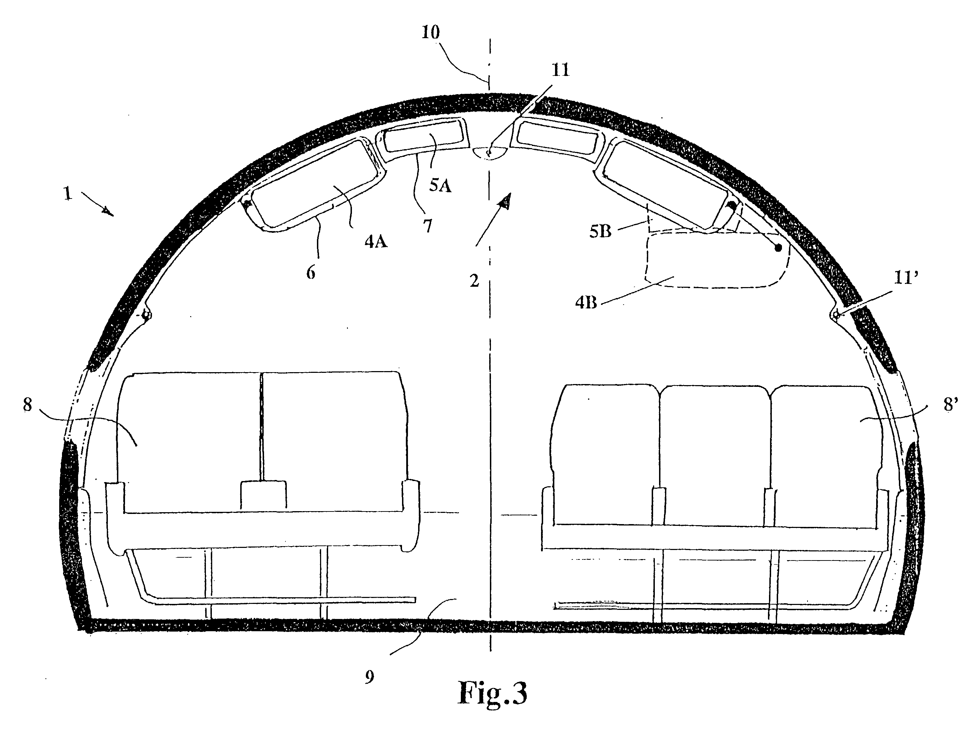

In Fig. 3 ist eine zweite Ausführungsform der Gepäckablage 3 in einer Passagierkabine 1 dargestellt. Hierbei sind die Staufächer 4, 5 anders angeordnet als in der ersten Ausführungsform. Das Kleinteilfach 5 ist in Richtung Rumpfmitte an der Decke 2 angeordnet und das Großteilfach 4 daneben positioniert. Die Kleinteilfächer 5 der beiden Kabinenseiten lassen in Nähe der Mittelachse 10 lediglich einen kleinen Deckenbereich frei, an dem eine Leuchtröhre 11 vorgesehen ist. Dieser Positionstausch der Staufächer 4, 5 verändert die Deckenkontur und es entsteht daraus resultierend eine nach oben abgestufte Deckenform. Die Absenkbewegung der Staufächer 4, 5 beim Öffnen der Gepäckablage 3 mittels des Koppelsystems erfolgt parallel entlang der Decken- bzw. Seitenkonturkrümmung des Flugzeugrumpfes, wobei das Großteilfach 4B sich im abgesenkten Zustand unterhalb des Kleinteilfaches 5B in Ruheposition befindet und neben der Abwärtsbewegung auch eine Schwenkbewegung der Fächer 4, 5 um eine Schwenkachse in eine horizontale Lage verwirklicht wird, um eine optimale Zugriffsmöglichkeit für die Passagiere zu den Gepäckfächern zu erreichen. Die untere Ruheposition der Gepäckfächer 4, 5 ist mit einer gestrichelten Linie in der rechten Kabinenhälfte gezeigt.
Eine mögliche Ausbildung des Koppelsystems ist in den Fign. 5 und 6 dargestellt.

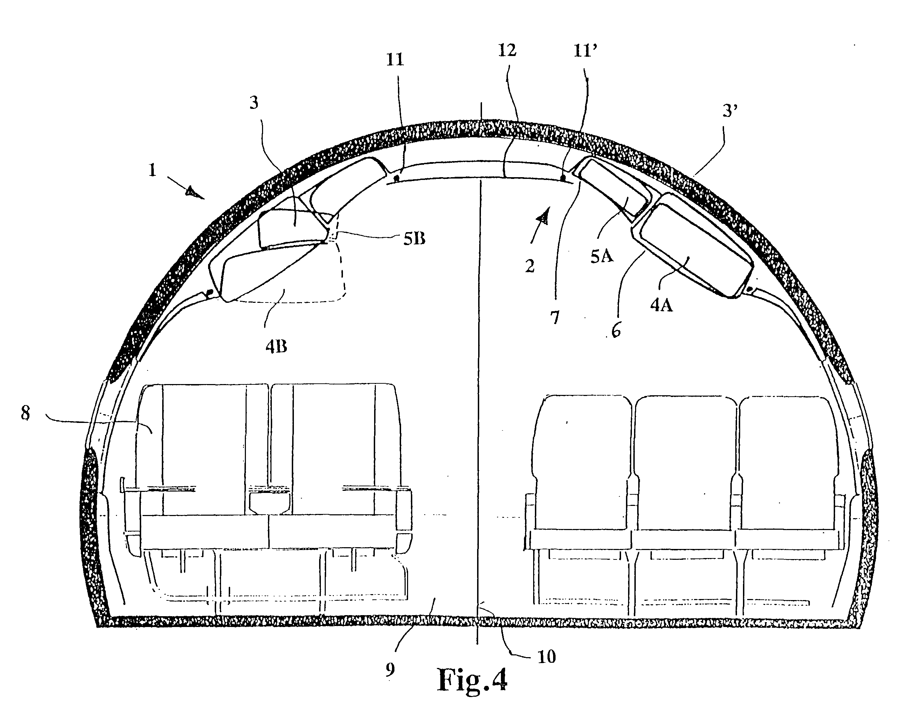

Die Fig. 4 zeigt eine dritte Ausführungsform der Gepäckablage 3 ähnlich der Fig. 3. Lediglich die Anordnung der Staufächer 4, 5 an der Decke 2 im Bereich der Rumpfmitte 10 ist anders gestaltet. In dieser Ausführungsform bleibt ein breiteres, feststehendes Deckenfeld frei. Dies erlaubt die Anbringung von Leuchtmitteln 11 hinter einem Deckenverkleidungselement 12. Mit dieser Ausführungsform können auch die Bodenplatten 6, 7 der Staufächer 4, 5 als Abstrahlflächen für die Raumbeleuchtung genutzt werden.
Die Fign. 5 und 6 zeigen eine Darstellung des Koppelsystems 13 zum Absenken der Staufächer 4, 5 gemäß der Ausführungsform der Gepäckablage 3 aus
Fig. 3. In Fig. 5 ist der geschlossene Zustand (A) und in Fig. 6 der abgesenkte Zustand (B) der Staufächer 4, 5 ersichtlich.
Die Absenkung der beiden Staufächer 4 und 5 wird realisiert mittels des Koppelsystems 13, welches jeweils an den Seitenwänden der Staufächer 4, 5 einer Seite vorgesehen ist. Entlang einer an der Flugzeugstruktur befestigten Ablaufschiene 14 werden die Staufächer 4, 5 auf- oder abgeführt. Die Ablaufschiene 14 ist entsprechend der Kontur des Flugzeugrumpfes geformt. Auf dieser Schiene 14 läuft ein Rollwagen 15 vom Großteilfach 4 und ein Rollwagen 16 vom Kleinteilfach 5. Die Rollwagen 15 und 16 sind jeweils mit einer Befestigungs- bzw. Schwenkachse 15A, 16A mit dem entsprechenden Staufaches 4 bzw. 5 verbunden. Die Unterstützungskraft zum Bewegen der Staufächer 4, 5 liefert ein Antrieb, beispielsweise ein E-Motor 17 oder ein Pneumatikantrieb, der über eine Antriebswelle 18 mit einer Transmissionseinrichtung verbunden ist. Die Antriebswelle 18 ist gleichzeitig mit einer Transmissionseinrichtung an der anderen Seitenwand der Gepäckfächer 4, 5 verbunden und realisiert damit einen Gleichlauf der beiden Koppelsysteme 13, 13' einer Gepäckablageneinheit 3. Die Transmissionseinrichtung kann als ein Zahnriemen- oder ein Kettentrieb ausgebildet sein. Mit diesem Riementrieb wird die kinematisch notwendige, miteinander gekoppelte Bewegung der Staufächer 4, 5 erzeugt. Die gezeigte Ausführungsform zeigt einen Zahnriementrieb, wobei innerhalb einer Zahnriemenabdeckung 21 mit einer eingearbeiteten Führungsbahn ein Zahnriemen 20 läuft. Die Führungsbahn gibt damit den Absenkweg der Staufächer 4, 5 vor.
Die Zahnriemenabdeckung 21 ist ein strukturfestes Teil und in Fig. 5 und 6 getrennt vom Zahnriemen 20 dargestellt, um die sonst verdeckten Teile sichtbar zu machen und die Funktionsweise des Koppelsystems 13 erläutern zu können. Nach Einschalten des Antriebes, vorzugsweise durch eine Drucktaste im Bereich der gangseitigen Sitze, läuft infolge der Drehung der Antriebswelle 18 des E-Motors 17 und eines damit verbundenen Zahnrades 19A der Zahnriemen 20 zum Absenken der Staufächer 4, 5 entgegen dem Uhrzeigersinn um die Zahnräder 19A und 19B. Um eine ausreichende Vorspannung des Riemens am Zahnrad 19A zu erreichen, ist dort eine Andrückrolle 19C vorgesehen. Die Zahnräder 19A und 19B sowie die Andrückrolle 19C sind in der Zahnriemenabdeckung 21 drehbar gelagert. Zur Begrenzung der Absenk- bzw. Aufschwenkbewegung der Staufächer 4, 5 sind Begrenzungsmittel 22, 23, 24 am Zahnriemen 20 vorgesehen. Ein Haltebolzen 22 für das Kleinteilfach 5 und ein Haltebolzen 23 für das Großteilfach 4 sind an der jeweiligen Seitenwand des Faches befestigt. Der Haltebolzen 22 ist fest mit dem Zahnriemen 20 verbunden und der Haltebolzen 23 ist auf dem Zahnriemen 20 relativbeweglich, wobei die Relativbewegung des Haltebolzens 23 von einer zwischen den beiden Bolzen 22, 23 angeordneten Abstandsfeder 24, Mitnehmern auf dem Zahnriemen 20 und Anschlägen innerhalb der Führungsbahn der Zahnradabdeckung 21 abhängig ist. Bei der Abwärtsbewegung wird über den Zahnriemen 20 der Haltebolzen 22 in der Führungsbahn der Zahnriemenabdeckung 21 entlanggeführt. Am Befestigungspunkt des Haltebolzens 22 am Zahnriemen 20 ist auch gleichzeitig der Anschlußpunkt der Abstandsfeder 24 vorgesehen. Die Abstandsfeder 24 ist vorzugsweise als eine Schraubenfeder ausgebildet, die den Zahnriemen 20 umhüllt. Das andere Ende der Abstandsfeder 24 ist mit dem Haltebolzen 23 verbunden. Mit der Abwärtsbewegung vom Bolzen 22 wird über die Abstandsfeder 24 auch der Bolzen 23 entlang der Führungsbahn der Zahnriemenabdeckung 21 geführt. Die Staufächer 4, 5 senken sich ab und schwenken um die Achsen 15A bzw. 16A in eine nahezu horizontale Position, um die Zugangsöffnungen 25, 26 zu den Fächern 4, 5 in eine für den Passagier gut erreichbare Position zu bringen. An dieser Stelle ist der Endpunkt der Abwärtsbewegung für den Bolzen 23 durch einen Anschlag (nicht gezeigt) innerhalb der Führungsbahn der Zahnriemenabdeckung 21 und damit auch für das Großteilfach 4 erreicht. Der Haltebolzen 22 wird durch die Bewegung des Zahnriemens 20 noch so weit bewegt, bis ein weiterer Anschlag in der Führungsbahn der Zahnriemenabdeckung 21 erreicht ist. Die Abstandsfeder 24 wird gestaucht. An dieser Stelle ist die untere Ruheposition der Staufächer 4, 5 erreicht, wie in Fig. 6 dargestellt ist. Der Antrieb des Zahnriemens 20 wird an dieser Position abgeschaltet, vorzugsweise durch Verwendung eines Endschalters. Die Gepäckfächer 4 und 5 können beladen werden.

Um nunmehr die Gepäckablage 3 wieder zu schließen, wird der Antrieb 17 betätigt mit dem der Zahnriemen 20, nunmehr im Uhrzeigersinn, in Bewegung gesetzt wird. Der Haltebolzen 22 wird mit dem Zahnriemen 20 nach oben bewegt und führt damit das Kleinteilfach 5 in Richtung Decke 2 der Kabine 1 in die geschlossene Position der Gepäckablage 3. Der Haltebolzen 23 führt das Großteilfach 4 mit einer durch einen definierten Abstand hervorgerufenen Bewegungsverzögerung ebenfalls in Richtung Decke 2 in die geschlossene Position. Der definierte Abstand zwischen den Bolzen 22 und 23 kann durch einen Mitnehmer auf dem Zahnriemen 20, der den Haltebolzen 23 mitzieht bzw. durch eine Umhüllung des Feder 24 mit definierter Länge erreicht werden. Die geschlossene Transportposition ist erreicht, wenn der Haltebolzen 22 einen Anschlag (nicht gezeigt) an der Führungsbahn der Zahnriemenabdeckung 21 erreicht und die Gepäckablage 3 gemäß der Fig. 5 geschlossen ist.

Die Staufächer 4 bzw. 5 sind als geschlossene Box ausgebildet, die lediglich zur Beladungsseite hin die Zugangsöffnungen 25, 26 aufweisen. Somit wird gewährleistet, daß die Box nicht überfüllt und der Gepäckfachinhalt beim gewaltsamen Schließen gequetscht wird. Mit der Verwendung einer geschlossenen Box ist außerdem die Eigensteifigkeit des Staufaches verbessert.

### Bezugszeichenliste

- 1 -: Passagierkabine
- 2 -: Deckenbereich
- 3 -: Gepäckablage
- 4, 4' -: Staufach (Großteilfach)
A - geschlossener Zustand
B - abgesenkter Zustand
- 5, 5' -: Staufach (Kleinteilfach)
A - geschlossener Zustand
B - abgesenkter Zustand
- 6, 6' -: Bodenplatte vom Großteilfach
- 7, 7' -: Bodenplatte vom Kleinteilfach
- 8, 8' -: Sitzreihe
- 9 -: Gang
- 10 -: Rumpfmitte, Mittelachse der Kabine
- 11 -: Leuchtmittel
- 12 -: Deckenverkleidungselement
- 13 -: Koppelsystem
- 14 -: Ablaufschiene
- 15 -: Rollwagen vom Großteilfach
- 16 -: Rollwagen vom Kleinteilfach
- 17 -: (Antrieb) E-Motor
- 18 -: Antriebswelle
- 19A,B -: Zahnräder
- 19C -: Andrückrolle
- 20 -: Zahnriemen
- 21 -: Zahnriemenabdeckung mit eingearbeiteter Führung
- 22 -: Haltebolzen für Kleinteilfach
- 23 -: Haltebolzen für Großteilfach
- 24 -: Abstandsfeder
- 25 -: Zugangsöffnung zu 4
- 26 -: Zugangsöffnung zu 5

## Patentansprüche

1. Gepäckablage für eine Passagierkabine, insbesondere für ein Verkehrsflugzeug, mit Gepäckfächern, welche über Führungssysteme aus einer geschlossenen Transportposition in eine offene Beladeposition absenkbar sind, **dadurch gekennzeichnet, daß** jedes Gepäckfach aus mindestens zwei Staufächern (4, 5) gebildet ist, wobei in geschlossener Transportposition der Gepäckablage (3) die Staufächer (4, 5) im Deckenbereich (2) der Passagierkabine (1) in Kabinenquerrichtung nebeneinander angeordnet sind und die Staufächer (4, 5) durch ihre Bodenplatten (6, 7) wenigstens einen Teil einer Deckenkontur der Passagierkabine (1) bilden und an jeder Seite der Staufächer (4, 5) das Führungssystem als ein Koppelsystem (13) zur gekoppelten Absenkung der Staufächer (4, 5) derart ausgebildet ist, daß in abgesenkter Beladeposition die Staufächer (4, 5) oberhalb der Sitzreihen (8) übereinander, mit einem zum Gang (9) gerichteten Zugriffsbereich (25, 26) positionierbar sind.

2. Gepäckablage nach Anspruch 1,
**dadurch gekennzeichnet, daß**
ein Staufach als Großteilfach (4) ausgebildet ist.

3. Gepäckablage nach einem der Ansprüche 1 oder 2,
**dadurch gekennzeichnet, daß**
ein weiteres Staufach als Kleinteilfach (5) ausgebildet ist.

4. Gepäckablage nach einem der Ansprüche 1 bis 3,
**dadurch gekennzeichnet, daß**
in geschlossener Transportposition der Gepäckablage (3) das Großteilfach (4) in Nähe der Mittelachse der Kabine (10) an einer Kabinenseite vorgesehen ist und sich das Kleinteilfach (5) in Fensterrichtung anschließt.

5. Gepäckablage nach einem der Ansprüche 1 bis 3,
**dadurch gekennzeichnet, daß**
in geschlossener Transportposition der Gepäckablage (3) das Kleinteilfach (5) in Nähe der Mittelachse der Kabine (10) an einer Kabinenseite vorgesehen ist und sich das Großteilfach (4) in Fensterrichtung anschließt.

6. Gepäckablage nach einem der Ansprüche 1 bis 5,
**dadurch gekennzeichnet, daß**
ein feststehendes Deckenverkleidungsfeld (12) zumindest im Bereich der Mittelachse der Kabine (10) angeordnet ist und sich daran die Staufächer (4, 5) anschließen.

7. Gepäckablage nach einem der Ansprüche 1 bis 6,
**dadurch gekennzeichnet, daß**
das jeweilige Staufach (4, 5) als geschlossene Box mit einer Zugriffsöffnung (25, 26) zum Fach (4, 5) ausgebildet ist.

8. Gepäckablage nach einem der Ansprüche 1 bis 7,
**dadurch gekennzeichnet, daß**
das Koppelsystem (13) aus einer an der Struktur befestigten Ablaufschiene (14) gebildet ist, wobei je Staufach (4, 5) ein Rollwagen (15, 16) vorgesehen ist, der das entsprechende Staufach (4, 5) entlang der Ablaufschiene (14) bewegt, wobei die Unterstützungskraft zum Bewegen des Staufaches (4, 5) mittels eines Antriebes, beispielsweise eines E-Motors (17) oder eines Pneumatikantriebes, aufgebracht wird, dessen Antriebswelle (18) mit einer Transmissionseinrichtung (20) verbunden ist, die zur Erzeugung der kinematisch notwendigen, miteinander gekoppelten Bewegung von Großund Kleinteilfach (4, 5) vorsehbar ist.

9. Gepäckablage nach Anspruch 8,
**dadurch gekennzeichnet, daß**
die Transmissionseinrichtung als ein Zahnriementrieb (20, 21) ausgebildet ist, wobei an die Staufächer (4, 5) angeordnete Haltebolzen (22, 23) mit dem Zahnriemen (20) in der Weise verbunden sind, daß ein Haltebolzen (22) fest auf dem Zahnriemen (20) sitzt und der weitere Haltebolzen (23) mit einer auf dem Zahnriemen (20) angeordneten Abstandsfeder (24) verbunden ist und somit innerhalb eines bestimmten Abschnittes des Zahnriemens (20) relativbeweglich auf dem Zahnriemen (20) ist.

10. Gepäckablage nach Anspruch 8,
**dadurch gekennzeichnet, daß**
die Transmissionseinrichtung als ein Kettentrieb ausgebildet ist.

## Claims

1. Luggage repository for a passenger cabin, particularly for a passenger aircraft, the said luggage repository having luggage bins which can be lowered out of a closed, transport position and into an open, loading position via guide systems, **characterised in that** each luggage bin is formed from at least two stowage bins (4, 5), the said stowage bins (4, 5) being disposed side by side in the ceiling region (2) of the passenger cabin (1) in the transverse direction of the said cabin when the luggage repository (3) is in the closed, transport position and the stowage bins (4, 5) forming at least part of the ceiling contour of the passenger cabin (1) by means of their bottom panels (6, 7) and the guide system being, on each side of the stowage bins (4, 5), constructed in such a way, as a coupling system (13) for the coupled lowering of the stowage bins (4, 5), that in the lowered, loading position, the said stowage bins (4, 5) can be positioned one above the other above the rows of seats (8), with an access region (25, 26) which is directed towards the aisle (9).

2. Luggage repository according to claim 1,
**characterised in that**
one stowage bin is constructed as a large partial bin (4).

3. Luggage repository according to one of claims 1 or 2,
**characterised in that**
another stowage bin is constructed as a small partial bin (5).

4. Luggage repository according to one of claims 1 to 3,
**characterised in that,**
when the luggage repository (3) is in the closed, transport position, the large partial bin (4) is provided in the vicinity of the central axis of the cabin (10) on one side of the said cabin, and the small partial bin (5) adjoins it in the direction of the window.

5. Luggage repository according to one of claims 1 to 3,
**characterised in that,**
when the luggage repository (3) is in the closed, transport position, the small partial bin (5) is provided in the vicinity of the central axis of the cabin (10) on one side of the said cabin, and the large partial bin (4) adjoins it in the direction of the window.

6. Luggage repository according to one of claims 1 to 5,
**characterised in that**
a fixed ceiling trim panel (12) is disposed at least in the region of the central axis of the cabin (10) and is adjoined by the stowage bins (4, 5).

7. Luggage repository according to one of claims 1 to 6,
**characterised in that**
the individual stowage bin (4, 5) is constructed as a closed box with an opening (25, 26) for access to the said bin (4, 5).

8. Luggage repository according to one of claims 1 to 7,
**characterised in that**
the coupling system (13) is formed from a run-down rail (14) fastened to the structure, each stowage bin (4, 5) being provided with a rolling carriage (15, 16) which moves the corresponding stowage bin (4, 5) along the said run-down rail (14), the supporting force for moving the said stowage bin (4, 5) being applied by means of a drive, for example an electric motor (17) or a pneumatic drive, the driving shaft (18) of which is connected to a transmission apparatus (20) which can be provided for generating the kinematically necessary, reciprocally coupled movement of the large and small partial bins (4, 5).

9. Luggage repository according to claim 8,
**characterised in that**
the transmission apparatus is constructed as a toothed-belt drive (20, 21), holding pins (22, 23) disposed on the stowage bins (4, 5) being connected to the toothed belt (20) in such a way that one holding pin (22) is seated fixedly on the said toothed belt (20) and the other holding pin (23) is connected to a distance spring (24) disposed on the said toothed belt (20) and is thus capable of relative motion on the said toothed belt (20) within a certain section of the latter.

10. Luggage repository according to claim 8,
**characterised in that**
the transmission apparatus is constructed as a chain drive.

## Revendications

1. Coffre à bagages pour la cabine de passagers d'un avion de transport, avec des compartiments à bagages inclinables d'une position de transport en une position de chargement ouverte,
**caractérisé en ce que**
chaque compartiment à bagage se compose d'au moins deux compartiments de retenue (4, 5), lesdits compartiments de retenue (4,5) étant, en position de transport fermée du coffre à bagages (3), situés les uns à côtés des autres dans la zone de plafond (2) de la cabine de passagers (1) et transversalement par rapport à ladite cabine, les compartiments de retenue (4,5) constituant via leurs plaques de base (6, 7) au moins une partie d'un contour de plafond de la cabine de passagers (1) et le système de guidage étant relié comme un système d'accouplement (13) à l'abaissement des compartiments de retenue (4, 5), de telle sorte que, en position de chargement abaissée, les compartiments de retenue (4, 5) puissent être positionnés les uns au-dessus des autres, par-delà les rangées de sièges (8), avec une zone de saisie (25, 26) orientée vers le couloir (9).

2. Coffre à bagages selon la revendication 1,
**caractérisé en ce que**
un compartiment de retenue a été conçu sous la forme d'un compartiment pour grandes pièces (4).

3. Coffre à bagages selon une des revendications 1 ou 2,
**caractérisé en ce que**
un autre compartiment de retenue a été conçu sous la forme d'un compartiment pour petites pièces.

4. Coffre à bagages selon une des revendications 1 à 3,
**caractérisé en ce que**
en position de transport fermée du coffre à bagages (3), le compartiment pour grandes pièces (4) est situé sur un des côtés de la cabine, à proximité de l'axe central de ladite cabine (10), et raccordé au compartiment pour petites pièces (5), dans la direction de la fenêtre.

5. Coffre à bagages selon une des revendications 1 à 3,
**caractérisé en ce que**
en position de transport fermée du coffre à bagages (3), le compartiment pour petites pièces (5) est situé sur un des côtés de la cabine, à proximité de l'axe central de la dite cabine (10) et raccordé au compartiment pour grandes pièces (4), dans la direction de la fenêtre.

6. Coffre à bagages selon une des revendications 1 à 5,
**caractérisé en ce que**
un champ de recouvrement de plafond (12) fixe est disposé au moins dans la zone de l'axe central de la cabine (10), les compartiments de retenue (4,5) étant raccordés audit champ.

7. Coffre à bagages selon une des revendications 1 à 6,
**caractérisé en ce que**
chaque compartiment de retenue (4, 5) a été conçu sous la forme d'une boîte fermée avec ouverture d'accès au compartiment (4, 5).

8. Coffre à bagages selon une des revendications 1 à 7,
**caractérisé en ce que**
le système d'accouplement (13) est constitué d'une compartiment pour petites pièces (14) fixé sur la structure, chaque compartiment de retenue (4, 5) comprenant un chariot (15, 16) déplaçant le compartiment de retenue (4, 5) le long du rail d'écoulement (14), la force de renforcement étant appliquée à l'aide d'un mécanisme de commande, par exemple un moteur E (17) ou un mécanisme de commande pneumatique dont l'arbre de transmission (18) est relié à une installation de transmission (20) prévisible pour produire le mouvement combiné du compartiment pour grandes pièces et du compartiment pour petites pièces (4, 5), nécessaire sur le plan cinématique.

9. Coffre à bagages selon la revendication 8,
**caractérisé en ce que**
l'installation de transmission se présente sous la forme d'une transmission à courroie dentée, des boulons de retenue (22, 23) disposés contre les compartiments de retenue (4, 5) étant reliés à la courroie dentée (20) de telle sorte qu'un boulon de retenue (22) repose de manière fixe sur la courroie dentée (20) et de telle sorte que l'autre boulon de retenue (23) soit relié à un ressort d'écartement (24), ledit boulon pouvant ainsi être déplacé sur la courroie dentée (20) dans une section bien déterminée de la courroie dentée.

10. Coffre à bagages selon la revendication 8,
**caractérisé en ce que**
l'installation de transmission se présente sous la forme d'une propulsion à chaîne.
